# EUROPÄISCHE PATENTANMELDUNG

(11) **EP 1 793 242 A2**
(43) Veröffentlichungstag der Anmeldung: **06.06.2007**
(21) Anmeldenummer: 06124145.1
(22) Anmeldetag: 15.11.2006
(51) Int. Cl.: G01S 13/58

(54) **Verfahren zur Abschätzung einer Geschwindigkeit**

(30) Priorität: 02.12.2005 DE 102005057570
(71) Anmelder: ROBERT BOSCH GMBH, 70442 Stuttgart (DE)
(72) Erfinder: Schneider, Marcus, 71642 Ludwigsburg (DE)

(57) **Zusammenfassung**

Die Erfindung betrifft ein Verfahren zur Abschätzung einer Geschwindigkeit eines sich relativ zu einer Einrichtung (2) bewegenden Reflektors (8). Bei diesem Verfahren werden n Horchfenster (10) abgetastet, wobei in jeweils einer Abtastfolge beginnend mit einem i-ten Horchfenster (10) k Horchfenster (10) nacheinander abgetastet werden, und nach Beendigung der jeweils einen Abtastfolge in einer darauffolgenden Abtastfolge ausgehend von einem i-ten Horchfenster (10) k Horchfenster (10) nacheinander abgetastet werden, wobei k kleiner n ist, so dass jedes der Horchfenster (10) nach einem ZeiLabsLand ΔL in zwei aufeinanderfolgenden Abtastfolgen wiederholt abgetastet wird.

## Beschreibung

Die Erfindung betrifft ein Verfahren zur Abschätzung einer Geschwindigkeit, eine Einrichtung zur Abschätzung einer Geschwindigkeit, ein Computerprogramm und ein Computerprogrammprodukt.

### Stand der Technik

Ein gepulster Radar-Sensor (Short Puls Radar Sensor, SRR) arbeitet nach dem Prinzip des Puls-Echo-Verfahrens. Hierbei wird in einer Variante ein Radar-Puls mit einer Frequenz von bspw. 24 GHz und einer Pulslänge ca. 30 cm von einer Antenne in Richtung eines Reflektors ausgesendet und ermittelt, wieviel Zeit verstreicht, bis ein reflektierter Radar-Puls von einem Empfänger empfangen wird. Befinden sich mehrere Reflektoren in der Nähe eines Sensors, so werden u.U. mehrere Echos des Radar-Pulses empfangen. Aus einer Laufzeit des Radar-Pulses wird eine Distanz zu den Reflektoren bestimmt.

Damit ein Signal ausreichender Energie beim Empfänger ankommt, sind relativ hohe Sendeleistungen erforderlich. Je geringer die Energie ist, desto schlechter ist ein Puls des Echos von einem Umgebungsrauschen zu unterscheiden, so dass nur ein geringes Signal-zu-Rausch-Verhältnis gegeben ist.

Radarsensoren, die die Geschwindigkeit eines Reflektors messen und dabei den Dopplereffekt nutzen, arbeiten nach einem anderen Prinzip. Sie senden statt eines kurzen Pulses entweder ein kontinuierliches Signal (constant wave, cw) oder sehr lange Pulse, mit einer Wellenlänge, die größer als 1 m ist, aus. Anschließend wird eine Verstimmung zur Sendefrequenz gemessen, indem das Signal durch einen Mischer mit einem Referenzsignal gemischt wird, wodurch sich je nach Grad der Verstimmung eine hochfrequente Schwebung in der Amplitude am Ausgang des Mischers ergibt.

Da eine Distanztrennschärfe des Radarsensors ungefähr einer Radarpulslänge entspricht, sind SRRs im Gegensatz zu Langpuls- oder cw-Sensoren sehr gut zur Distanzmessung geeignet. Ihr Nachteil liegt jedoch in der schlechten Eignung für die Geschwindigkeitsmessung. Da ein längerer Sendepuls eine höhere Belastung der Ausgangsverstärker zur Folge hat, sind SRRs mit Langpuls-Sensoren in der Regel nicht baugleich.

Vor diesem Hintergrund wird ein Verfahren mit den Merkmalen des Patentanspruchs 1, eine Einrichtung mit den Merkmalen den Patentanspruchs 5, ein Computerprogramm mit den Merkmalen des Patentanspruchs 9 und ein Computerprogrammprodukt mit den Merkmalen des Patentanspruchs 10 vorgestellt.

### Vorteile der Erfindung

Die Erfindung betrifft ein Verfahren zur Abschätzung einer Geschwindigkeit eines sich relativ zu einer Einrichtung bewegenden Reflektors. Bei diesem Verfahren werden n Horchfenster abgetastet, wobei in jeweils einer Abtastfolge beginnend mit einem i-ten Horchfenster k Horchfenster nacheinander abgetastet werden, und nach Beendigung der jeweils einen Abtastfolge in einer darauffolgenden Abtastfolge ausgehend von einem i+1-ten Horchfenster k Horchfenster nacheinander abgetastet werden, wobei k kleiner n ist, so dass jedes der Horchfenster nach einem definierten Zeitabstand Δt in zwei aufeinanderfolgenden Abtastfolgen wiederholt abgetastet wird.

Die erfindungsgemäße Einrichtung ist zur Abschätzung einer Geschwindigkeit eines sich relativ zu der Einrichtung bewegenden Reflektors vorgesehen. Diese Einrichtung ist dazu ausgebildet, n Horchfenster abzutasten, wobei in einer Abtastfolge ausgehend von einem i-ten Horchfenster k Horchfenster nacheinander abzutasten sind, und nach Beendigung der Abtastfolge in der darauffolgenden Abtastfolge ausgehend von einem i+1-ten Horchfenster k Horchfenster abzutasten sind, wobei k kleiner n ist, so dass jeweils ein Horchfenster nach einem definierten Zeitabstand Δt in zwei aufeinanderfolgenden Abtastfolgen wiederholt abzutasten ist.

Weitere vorteilhafte Ausgestaltungen der Erfindungen ergeben sich jeweils aus den abhängigen Patentansprüchen.

Die Erfindung betrifft zudem ein Computerprogramm mit Programmcodemitteln, um alle Schritte des erfindungsgemäßen Verfahrens durchzuführen, wenn das Computerprogramm auf einem Computer oder einer entsprechenden Recheneinheit, insbesondere in der erfindungsgemäßen Einrichtung, ausgeführt wird.

Die Erfindung betrifft des weiteren ein Computerprogrammprodukt mit Programmcodemitteln, die auf einem computerlesbaren Datenträger gespeichert sind, um alle Schritte des erfindungsgemäßen Verfahrens durchzuführen, wenn das Computerprogramm auf einem Computer oder einer entsprechenden Recheneinheit, insbesondere in der erfindungsgemäßen Einrichtung, ausgeführt wird.

Mit der vorliegenden Erfindung ist es möglich, mit einem herkömmlichen Radar-Sensor (SRR) die Geschwindigkeit eines Reflektors zu schätzen. Dazu wird eine abzutastende Strecke zwischen der Einrichtung und dem Reflektor oder einem Hindernis in vorzugsweise n äquidistante Teilstrecken aufgeteilt. Jeder dieser n Teilstrecken wird eines der n Horchfenster zugeordnet. Jeweils ein Horchfenster kann bei einzelnen aufeinanderfolgenden Abtast- bzw. Scanfolgen mehrmals nacheinander abgetastet bzw. gescannt werden.

In definierten Zeitabständen (Δt) wird wiederholt eine Phasenlage in einem der n Horchfenster (Range Gate, kurz RG) gemessen und anhand einer zeitlichen Änderung einer Phasenlage die Geschwindigkeit des Reflektors, der sich in dieser Zeit an entsprechender Stelle befindet, geschätzt. Durch die wiederholte Messung jeweils eines Horchfensters in zwei aufeinanderfolgenden Abtastfolgen wird ein Signal-zu-Rausch-Verhältnis verbessert.

Entsprechend einer Wahl für k wird ein i-tes Horchfenster in k-1 Abtastfolgen k-1-mal wiederholt abgetastet, danach werden die anderen Horchfenster (RGi+1, RGi+2, RGi+3, ..., RGn-2, RGn-1, RGn, RG1, RG2, ..., RGi-2, RGi-1) abgetastet oder verarbeitet, nachdem alle anderen n-1 Horchfenster wiederholt abgetastet wurden, wird das i-te Horchfenster erneut k-1-mal wiederholt abgetastet. Es ist denkbar, nur einem bestimmten Abschnitt der insgesamt abtastbaren Strecke die n Horchfenster zuzuordnen, wobei dieser Abschnitt durch einen Aufenthaltsort des Reflektors bestimmt ist, dessen Geschwindigkeit abzuschätzen ist. Die Zeitabstände (Δt) zwischen zwei Abtastfolgen können so gewählt werden, dass eine definierte Maximalgeschwindigkeit gerade noch erfasst werden kann.

Die Geschwindigkeit des Reflektors kann direkt geschätzt werden, ohne dass ein sog. Tracking zwingend ist. Die Erfindung kann auf üblichen gepulsten Radar-Sensoren (SRRs) ohne Änderungen der Hardware angewendet werden. Bei entsprechender Wahl der Abtastfolge der Horchfenster wird das Signal-zu-Rausch-Verhältnis verbessert, die hohe Distanztrennschärfe eines SRRs bleibt erhalten.

Bei einer sog. geschachtelten Doppelabtastung hat ein Horchfenster eine Distanzlänge von 1 cm. Eine Abtastung beginnt bspw. mit dem ersten Horchfenster RG1 bei 1 cm und endet bei dem letzten Horchfenster RG15 nach 15 cm. Eine Aufenthalts- oder Messzeit für jeweils ein Horchfenster beträgt 1 ms. Ein Reflektor oder Ziel, der bzw. das sich währenddessen um 1 cm bewegt, erzeugt bei dieser Distanzlänge eine Phasenänderung von 360°. Ein herkömmlicher SRR wird i. d. R. folgendermaßen abtasten: "RG1 RG2 RG3 RG4 RG5 RG6 RG7 RG8 RG9 RG10 RG11 RG12 RG13 RG14 RG15 - RG1 RG2 RG3 RG4 RG5 RG6 RG7 RG8 RG9 RG10 RG11 RG12 RG13 RG14 RG15 - RG1 RG2 ...." In diesem Fall werden 15 Horchfenster durchgehend nacheinander abgetastet, die Abtastung wiederholt sich alle 15 ms. Es lassen sich somit lediglich Phasenänderungen von maximal 180° in 15 ms erkennen, dies entspricht einer messbaren Geschwindigkeit von 0,5 cm/30 ms = 0,33 m/s = 1,2 km/h.

Erfindungsgemäß wird für k = 3 eines der n = 15 Horchfenster alle 2 ms wiederholt und es wird immer um ein Horchfenster weitergeschaltet: "RG1 RG2 RG3 RG2 RG3 RG4 RG3 RG4 RG5 RG4 RG5 RG6 RG5 RG6 RG7 RG6 RG7 RG8 RG7 RG8 RG9 RG8 RG9 RG10 RG9 RG10 RG11 RG10 RG11 RG12 RG11 RG12 RG13 RG12 RG13 RG14 RG13 RG14 RG15 - RG14 RG15 RG1 RG15 RG1 RG2 RG1 RG2 RG3 ...". Demnach beginnt eine erste Abtastfolge mit dem ersten Horchfenster (i = 1), die nachfolgende Abtastfolge mit dem zweiten Horchfenster (i+1 = 2) usw. Damit sind Phasenänderungen von 180° in 2 ms und damit Geschwindigkeiten von 0,5 cm/2 ms = 2,5 m/s = 9 km/h messbar, da jeweils ein Horchfenster innerhalb kurzer Zeit zweimal hintereinander abgetastet wird.

In der Praxis beträgt die Aufenthaltszeit in einem Horchfenster nur ca. 50 µs, so können mehr Wiederholungen jeweils eines Horchfensters durchgeführt werden, was eine Information zu der Geschwindigkeit stabilisiert und das Signal-zu-Rausch-Verhältnis verbessert. Bei drei Wiederholungen pro Horchfenster mit k = 4 und einem Abstand von 200 µs zwischen jeweils zwei Wiederholungen ergibt sich bspw. eine maximal detektierbare Geschwindigkeit von ca. 112 km/h bei einer Verbesserung des Signal-zu-Rausch-Verhältnisses von über 70%.

Anwendungen des Verfahrens und/oder der Einrichtung sind bei einer Pre-Crash-Detektion, beim Fußgängerschutz, bei Staufolgefahrten, bei Bewegungsmeldern, bei einer Tote-Winkel-Detektion, bei Spurwechselassistenten usw. denkbar.

Bei der zur Durchführung des Verfahrens eingesetzten Abtastung werden mehrere zeitlich aufeinanderfolgende Echos des Reflektors (z.B. 10 Echos) in einer Schaltung integriert. Somit wird bei geringer Sendeleistung eine hohe Detektionsleistung erreicht.

Durch bevorzugte Verwendung einer sog. Verzögerungsschaltung ("Delay-Line") kann erreicht werden, dass ab einem Sendebeginn bis zu einem Zeitpunkt, ab dem eine gewünschte Maximaldistanz zu dem Reflektor noch erfasst werden soll, einen Puls analog zu erfassen und abzulegen ist, damit das Signal eines nachfolgenden Pulses integriert werden kann. Dabei wird ein Empfänger des SRRs nicht die gesamte Zeit, sondern verzögert zu ganz bestimmten Zeitpunkten und dann jeweils nur kurz eingeschaltet. Der Zeitpunkt des Einschaltens und eine Zeitdauer werden so gewählt, dass jeweils nur reflektierte Pulse in dem Horchfenster für einen bestimmten Distanzbereich, bspw. für 100 cm bis 102 cm, durchgelassen und erfasst werden. Ein jeweiliger Distanzbereich kann über eine Laufzeit der Signale festgelegt werden. Die für den Distanzbereich empfangene Energie wird in einer einfachen Schaltung über beliebig viele, bspw. zehn, Pulse integriert. D.h. es ist zwar ein schneller Schalter und Zeitmesser (Delay-Line) aber kein Hochfrequenzspeicher notwendig. Nachdem genügend Pulse für den Distanzbereich gesendet wurden, wird ein Ergebnis der Integration, in der Regel eine Spannung, digitalisiert und von einem Mikrocontroller mit der Zusatzinformation "gültig bei 100-102 cm" abgespeichert.

Anschließend wird ein Integrator gelöscht, auf ein folgendes Horchfenster, z.B. von 102 cm bis 104 cm, weitergeschaltet und die Integration über mehrere Pulse beginnt erneut. Ein Mikrocontroller erhält nun einen Wert für die Distanz 102-104 cm für das nächste Horchfenster und legt diesen entsprechend ab. Das Horchfenster wird in gängigen SRRs schrittweise von einem Nahbereich bis in einen Fernbereich oder umgekehrt abtastend verschoben, jeweilige Werte für den Integrator werden in einer sequenziellen Liste in einem Speicher des Mikrocontrollers abgelegt. Damit liegt ein digitalisiertes Radar-Amplitudensignal vor, das in jenen Horchfenstern, in denen sich Reflektoren befinden, hohe Werte und in anderen Bereichen niedrige Werte besitzt. Eine anschließende Signalverarbeitung sucht in diesem Signal Bereiche mit hoher Amplitude und gibt für jeden der Bereiche die entsprechende Distanzinformation aus.

Funktionen z.B. für den Kfz-Bereich benötigen aber sowohl die Geschwindigkeitsinformation, um z.B. rechtzeitig eine Annäherung eines Hindernisses zu erkennen, als auch die Distanz, um z.B. den korrekten Einschlagszeitpunkt mit dem Hindernis zu berechnen, um präzise die Airbags anzusteuern.

### Zeichnung

Figur 1 zeigt in schematischer Darstellung eine bevorzugte Ausführung der erfindungsgemäßen Einrichtung bei Durchführung des erfindungsgemäßen Verfahrens.
Figur 2 zeigt ein Diagramm eines Empfangssignals.
Figur 3 zeigt in schematischer Darstellung ein Detail bei einer möglichen Durchführung des erfindungsgemäßen Verfahrens.
Figuren 4 bis 6 zeigen Diagramme von Empfangssignalen.

### Beschreibung der Ausführungsbeispiele

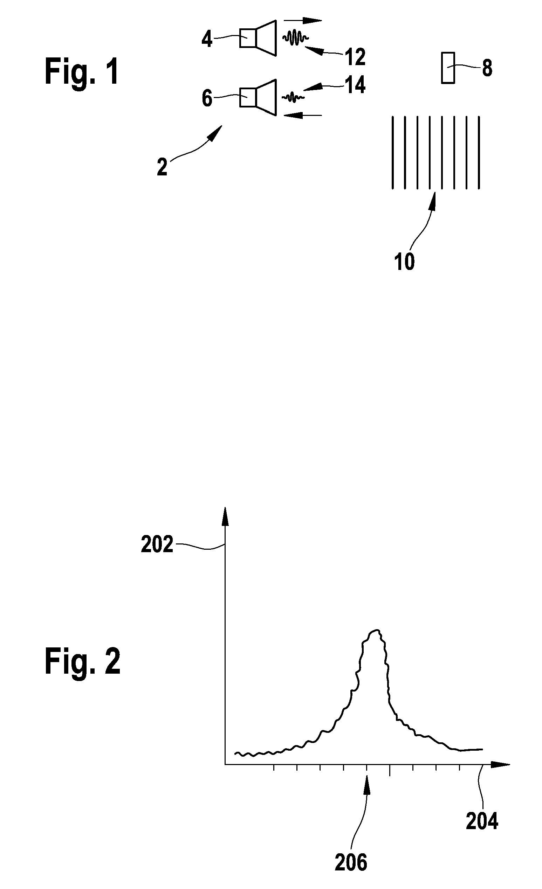

Die in Figur 1 schematisch dargestellte Einrichtung 2 weist einen Sender 4 und einen Empfänger 6 auf. Zur Bestimmung einer Geschwindigkeit eines Reflektors 8 wird eine zu untersuchende Strecke in eine hier durch Striche voneinander getrennte äquidistante Teilstrecken, wobei jeder Teilstrecke ein Horchfenster 10 zugeordnet ist, aufgeteilt. Bei Durchführung des Verfahrens werden diese Teilstrecken Horchfenster 10 für Horchfenster 10 nacheinander abgetastet, wobei der Sender 4 für jedes abzutastende Horchfenster 10 ein Sendesignal 12 aussendet, dieses wird von dem Reflektor 8 als Echo reflektiert und von dem Empfänger 6 als Empfangssignal 14 empfangen.

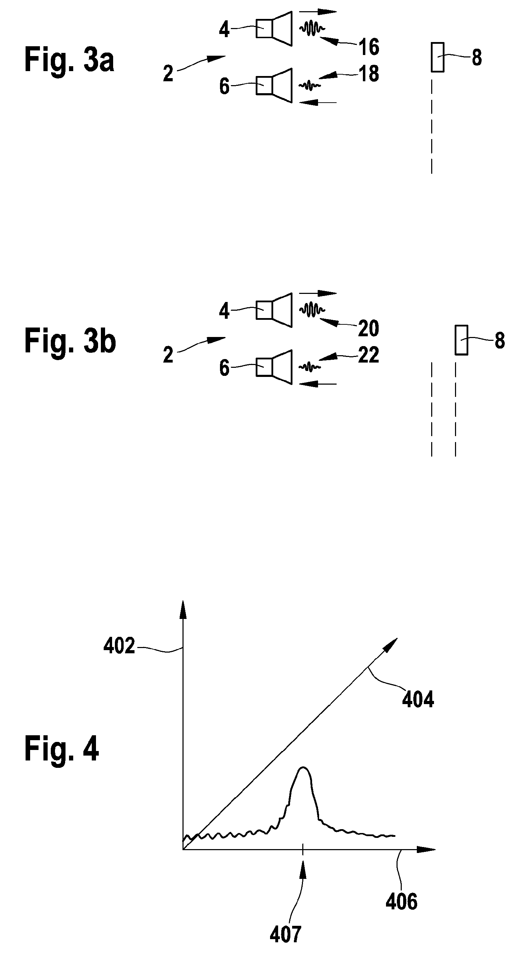

Figur 2 zeigt ein Diagramm zu einem Empfangssignal 14. Dabei ist entlang einer Ordinate 202 dessen Amplitude über einem Abstand d entlang einer Abszisse 204 aufgetragen. Bei Durchführung des Verfahrens werden nur für Horchfenster 10, die in einem Abstand d₀ (Punkt 206 der Abszisse 204) von der Einrichtung 2 entfernt sind, deutliche Empfangssignal registriert.

Die Figuren 3a und 3b zeigen einen Messvorgang gemäß Figur 1, wobei der Reflektor jeweils unterschiedliche Abstände zu der Einrichtung 2 aufweist und der Sender 4 zueinander phasenverschobene Sendesignale 16, 20 aussendet und das entsprechend phasenverschobene Empfangssignale 18, 22 empfängt. Durch diese Vorgehensweise ist es möglich, eine Störempfindlichkeit in der Nähe einer Arbeitsfrequenz der Signale zu verringern. Die Einrichtung 2 weist hierzu vorzugsweise zwei zusätzliche Mischer auf, die hier nicht dargestellt sind. In diesen sog. Mischern wird das empfangene hochfrequente Signal mit einem Referenzsignal von bspw. 24 GHz gemischt, wodurch Signale abseits dieser Frequenz herausgefiltert werden. Durch die Mischer ("I" und "Q"), die hier zueinander um 90° phasenverzögert sind, kommt es je nach Phasenlage zwischen dem Empfangssignal 18, 22 und dem Referenzsignal zu einer Verstärkung oder Auslöschung des Empfangssignals. In dem Fall, in dem der erste Mischer das Signal maximal auslöscht, verstärkt der zweite Mischer das Signal maximal, ein gemeinsamer Betrag beider Signale liefert dann ein eigentliches Nutzsignal.

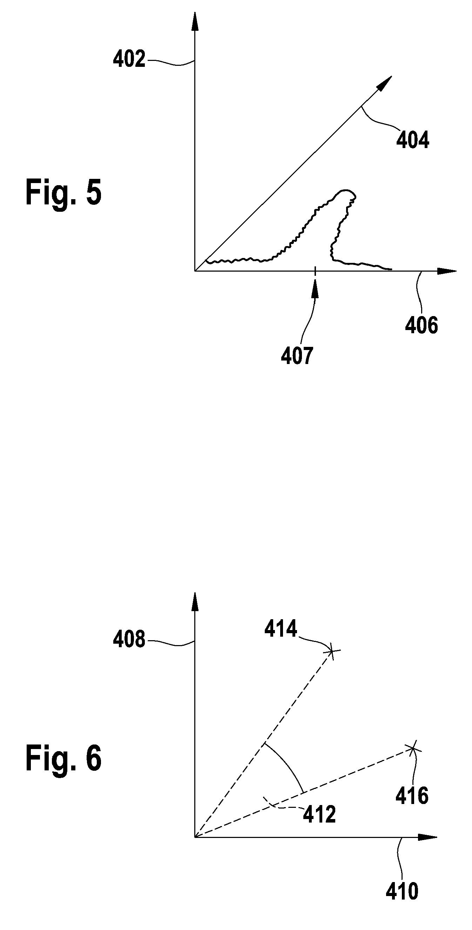

In den Diagrammen in den Figuren 4 und 5 sind Empfangssignale für die Mischer I (erste Ordinate 402) und Q (zweite Ordinate 404) über dem Abstand d (Abszisse 406, mit einem Maximum in einem Punkt 407) aufgetragen. Im vorliegenden Fall ist bei Figur 3a das Empfangssignal 18 in einem Kanal für den Mischer I maximal (Diagramm aus Figur 4). In Figur 3b ist das Empfangssignal 22 in einem Kanal für den Mischer Q maximal (Diagramm aus Figur 5).

Das Diagramm aus Figur 6 zeigt, wie anhand eines Amplitudenverhältnisses der Empfangssignale 18, 22 beider Mischer I (Ordinate 408), Q (Abszisse 410) eine Phase Δϕ (Bezugszeichen 412) berechnet werden kann, die praktisch ein Maß dafür ist, wie sich das Empfangssignal 18, 22 zwischen den beiden Maxima der Mischer, im vorliegenden Fall zwischen dem Punkt 414 zum Zeitpunkt t₁ und dem Punkt 416 zum Zeitpunkt t₁+Δt₁, in einem Zeitintervall Δt₁ verändert. Bewegt sich der Reflektor nur geringfügig um den Bruchteil einer Wellenlänge, so verschiebt sich die Phase Δϕ 412 geringfügig, wobei sie sich dreht.

Mit dem vorliegenden erfindungsgemäßen Verfahren bzw. der vorliegenden erfindungsgemäßen Einrichtung kann demnach eine Geschwindigkeit über die Phasenlage von zwei gemischten Signalen gemessen werden.

## Patentansprüche

1. Verfahren zur Abschätzung einer Geschwindigkeit eines sich relativ zu einer Einrichtung (2) bewegenden Reflektors (8), bei dem n Horchfenster (10) abgetastet werden, wobei in jeweils einer Abtastfolge beginnend mit einem i-ten Horchfenster (10) k Horchfenster (10) nacheinander abgetastet werden, und nach Beendigung der jeweils einen Abtastfolge in einer darauffolgenden Abtastfolge ausgehend von einem i+1-ten Horchfenster (10) k Horchfenster (10) nacheinander abgetastet werden, wobei k kleiner n ist, so dass jedes der Horchfenster (10) nach einem Zeitabstand Δt in zwei aufeinanderfolgenden Abtastfolgen wiederholt abgetastet wird.

2. Verfahren nach Anspruch 1, bei dem vorgesehen ist, dass eine abzutastende Strecke in n Teilstrecken aufgeteilt wird, wobei jeweils eines dieser n Horchfenster (10) einer dieser n Teilstrecken zugeordnet ist.

3. Verfahren nach Anspruch 1 oder 2, bei dem von einem Sender (4) der Einrichtung (2) für jedes abzutastende Horchfenster (10) ein Sendesignal (12, 16) ausgesandt wird und ein Empfangssignal (14, 18, 22) als Echo des von dem Reflektor (8) reflektierten Sendesignals (12, 16) empfangen wird.

4. Verfahren nach Anspruch 3, bei dem das Empfangssignal (14, 18, 22) zur Bereitstellung eines ersten Mischsignals mit einem ersten Referenzsignal und zur Bereitstellung eines zweiten Mischsignals mit einem zu dem ersten Referenzsignal phasenverschobenen zweiten Referenzsignal gemischt wird, und für jedes Horchfenster (10) eine Phasenlage zwischen den beiden Mischsignalen gemessen wird.

5. Einrichtung zur Abschätzung einer Geschwindigkeit eines sich relativ zu der Einrichtung (2) bewegenden Reflektors (8), die dazu ausgebildet ist, n Horchfenster (10) abzutasten, wobei in einer Abtastfolge ausgehend von einem i-ten Horchfenster (10) k Horchfenster (10) nacheinander abzutasten sind, und nach Beendigung der Abtastfolge in der darauffolgenden Abtastfolge ausgehend von einem i+1-ten Horchfenster (10) k Horchfenster (10) abzutasten sind, wobei k kleiner n ist, so dass jeweils ein Horchfenster (10) nach einem Zeitabstand Δt in zwei aufeinanderfolgenden Abtastfolgen wiederholt abzutasten ist.

6. Einrichtung nach Anspruch 4, die dazu ausgebildet ist, ein Verfahren nach einem der Ansprüche 1 bis 4 durchzuführen.

7. Einrichtung nach Anspruch 5 oder 6, die einen Sender (4) zum Aussenden eines Sendesignals (12, 16, 20) und einen Empfänger (6) zum Empfangen eines Empfangssignals (14, 18, 22) als Echo des von dem Reflektor (8) reflektierten Sendesignals (12, 16, 20), einen Mischer und eine Datenverarbeitungseinrichtung aufweist.

8. Einrichtung nach einem der Ansprüche 5 bis 7, die als gepulster Radar-Sensor ausgebildet ist.

9. Computerprogramm mit Programmcodemitteln, um alle Schritte eines Verfahrens nach einem der Ansprüche 1 bis 4 durchzuführen, wenn das Computerprogramm auf einem Computer oder einer entsprechenden Recheneinheit, insbesondere in einer Einrichtung nach einem der Ansprüche 5 bis 8, ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 4 durchzuführen, wenn das Computerprogramm auf einem Computer oder einer entsprechenden Recheneinheit, insbesondere in einer Einrichtung nach einem der Ansprüche 5 bis 8, ausgeführt wird.
